# EUROPEAN PATENT SPECIFICATION

(11) **EP 2 476 618 B1**
(45) Date of publication and mention of the grant of the patent: **05.06.2019**
(21) Application number: 11195722.1
(22) Date of filing: 23.12.2011
(51) Int. Cl.: B64D 33/08, B64D 31/00

(54) **Integrated bleed and engine controller**
Integrierte Ablauf- und Motorsteuerung
Contrôleur de purge et moteur intégré

(30) Priority: 14.01.2011 US 201113006808
(43) Date of publication of application: 18.07.2012
(73) Proprietor: Hamilton Sundstrand Corporation, Windsor Locks, CT 06096-1010 (US)
(72) Inventor: De Francesco, Gregory L., Simsbury, CT Connecticut 06070 (US)
(74) Representative: Dehns

(56) References cited:
- GB-A- 2 182 723
- US-A- 5 137 230
- US-A- 6 148 179
- US-A1- 2009 298 407

## Description

### BACKGROUND

The present invention relates to aircraft engine control systems. In particular, the invention relates to bleed air control systems for aircraft environmental control systems.

Aircraft environmental control systems maintain aircraft cabin air pressures and temperatures within a target range for the safety and comfort of aircraft passengers. This is done through the use of compressed air taken from two compressor stages (bleed air) of at least one of the bypass turbine engines propelling the aircraft. Each of the two air pressures available from the compressor, low pressure (LP) and high pressure (HP), are directed to the environmental control system (ECS) located in the fuselage through pressure lines or plenums. A pneumatic valve controller operates a series of pneumatically operated bleed valves in response to electronic control signals from the ECS through an ECS bleed controller in the fuselage to control the relative flows of LP and HP compressed air flowing to the ECS. The LP and HP bleed air as taken from the compressor is at a very elevated temperature due to the natural increase in the temperature of a gas as it is compressed. Thus, before the bleed air flows to the ECS, where it is cooled to a desired cabin temperature, it is "pre-cooled" by flowing through an air-to-air heat exchanger known as a "pre-cooler." Cool fan air from the bypass region of the engine also flows through the pre-cooler to cool the bleed air. Air pressure in the bleed air lines is measured by at least one pressure sensor which provides this information to the ECS bleed controller. Similarly, air temperature in the bleed air lines is measured by at least one temperature sensor which provides this information to the ECS bleed controller. The ECS bleed controller uses the air pressure and temperature information along with other information from around the aircraft to direct the pneumatic valve controller to provide bleed air at a desired pressure to the environmental control system. The ECS bleed controller also directs a fan air valve to adjust the flow of fan air to the pre-cooler to provide bleed air to the ECS at a desired temperature.

US 6148179 discloses a full authority digital engine control (FADEC) which can also control core bleeding, and thus serves as an electronic engine control and as an environmental control system bleed controller.

### SUMMARY

The present invention provides an integrated electronic engine control and environmental control system bleed control apparatus for use with an aircraft engine. The apparatus comprises an electronic engine controller, an environmental control system bleed controller for controlling a flow of bleed air from the aircraft engine to an environmental control system located in an aircraft fuselage, and a housing for mounting on or near the aircraft engine. The housing contains both the electronic engine controller and the environmental control system bleed controller.

The invention also provides a method of controlling a flow of bleed air from an aircraft engine to an ECS, the method comprising: generating a bleed air requirement signal in the ECS located in an aircraft fuselage; transmitting the bleed air requirement signal over a digital data bus to an ECS bleed controller within an electronic engine controller (EEC) located on or near the aircraft engine; receiving the bleed air requirement signal at the ECS bleed controller; controlling the flow of bleed air from the aircraft engine to the ECS with a signal transmitted from the ECS bleed controller to an actuator located on or near the aircraft engine, wherein the signal transmitted from the ECS bleed controller is in response to the received bleed air requirement signal.

### BRIEF DESCRIPTION OF THE DRAWINGS

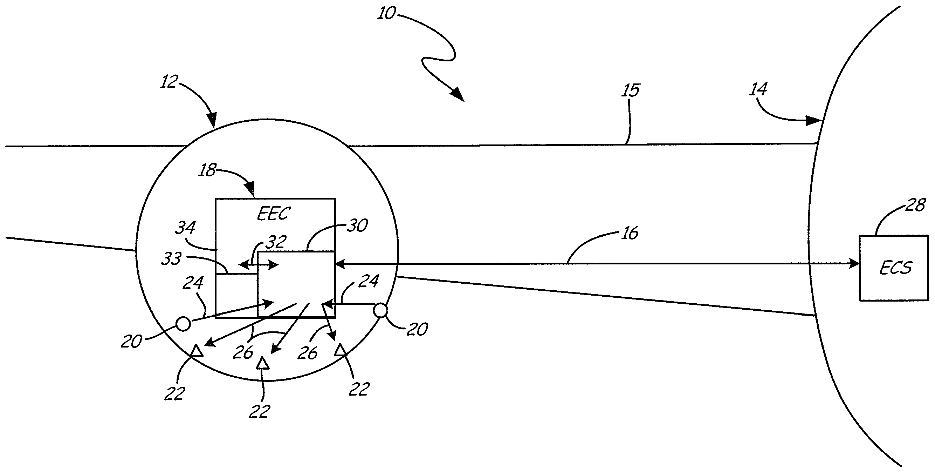

The figure is a schematic view illustrating an embodiment of the present invention for reducing the weight of an aircraft by integrating an electronic engine control and environmental control system bleed control.

### DETAILED DESCRIPTION

A conventional ECS bleed controller located in a fuselage interfaces via electrical cabling with temperature sensors, pressure sensors, and actuators, such as torque motors controlling pneumatic valves, all located on or near the aircraft engine. The ECS bleed controller also interfaces with an ECS, also located in the fuselage. In addition, the conventional ECS bleed controller interfaces with the Electronic Engine Controller (EEC) located on or near the aircraft engine. This arrangement requires many lengthy sets of electrical cabling between the ECS bleed controller in the fuselage and sensors and actuators in the aircraft engine, compared to a few short electrical cables between the ECS and the ECS bleed controller. The present invention integrates an ECS bleed controller with an EEC. Integrating the ECS bleed controller with the EEC significantly reduces the length of electrical cabling between the ECS bleed controller and the plurality of torque motors controlling pneumatic valves, temperature sensors, pressure sensors, and the EEC, all located on or near the aircraft engine. Communication between the ECS and the ECS bleed controller is maintained over a digital data bus between the ECS bleed controller and the ECS. Replacing the bulk of electrical cabling between an ECS bleed controller and the plurality of torque motors, temperature sensors, pressure sensors, and the EEC, all located on or near the aircraft engine, with a single data bus between the ECS bleed controller and the ECS achieves a significant weight savings. The weight savings results in cost savings from reduced fuel usage. By integrating the ECS bleed controller into the EEC, additional cost and weight savings are realized by sharing a single housing for both functions, as well as internal components, for example, a power supply and a microprocessor. Finally, by reducing the total electrical cabling length, opportunities for failure associated with the lengthy electrical cables are reduced, increasing the reliability of the ECS bleed controller.

The figure is a schematic view illustrating an embodiment of the present invention for reducing the weight of an aircraft by integrating an electronic engine control and environmental control system bleed control. The figure illustrates an ECS bleed controller integrated into an EEC in an aircraft engine. The figure shows aircraft 10 comprised of engine 12, fuselage 14, wing 15, and ECS digital bus 16. Engine 12 comprises EEC 18, bleed system sensors 20, bleed system actuators 22, sensor electrical cables 24, actuator electrical cables 26 and an engine pylon (not shown). Fuselage 14 comprises ECS 28. EEC 18 comprises ECS bleed controller 30, internal digital bus 32, power supply 33, and housing 34. ECS digital bus 16 is a data bus capable of carrying digital data, for example, Ethernet, CAN, SPI, EIA/RS-485, MIL-STD-1553, IEEE 1394, and ARINC 429. EEC 18 is an electronic control device that receives engine data inputs, for example engine pressures and temperatures, and applies a set of control rules to the inputs to generate control signals for various engine functions, including fuel metering and surge control. Bleed system sensors 20 are sensors for measuring bleed air characteristics, for example, pressure sensors for measuring air pressure in the bleed air lines and temperature sensors for measuring air temperature in the bleed air lines. Bleed system actuators 22 are actuators for controlling bleed air characteristics, for example, a solenoid valve, a stepper motor, an electric motor, or a torque motor for adjusting a pneumatic bleed valve to control air pressure in the bleed air lines or a pneumatic fan air valve to control air temperature in the bleed air lines. Signals from bleed system sensors 20 and signals to bleed system actuators 22 are analog. Sensor electrical cables 24 and actuator electrical cables 26 are electrical connections for carrying analog electrical signals and are generally RF shielded to reduced electrical interference with the analog signals. ECS 28 is an electronic control device that receives data inputs associated with monitoring the aircraft cabin air pressure and temperature and applies a set of control rules to the inputs to generate bleed air pressure and temperature requirement signals. ECS bleed controller 30 is an electronic control device that receives data inputs associated with providing bleed air to the ECS and applies a set of control rules to the inputs to generate control signals for actuators controlling valves associated with providing bleed air to the ECS. Internal digital bus 32 is a data bus capable of carrying digital data, for example, Ethernet, CAN, SPI, EIA/RS-485, MIL-STD-1553, IEEE 1394, and ARINC 429. Housing 34 is any type of box or containment structure suitable for protecting electronic devices aboard an aircraft engine.

Referring to the figure, engine 12 is attached via the engine pylon (not shown) to wing 15, which is attached to fuselage 14 of aircraft 10. ECS 28 aboard fuselage 14 is electrically connected to ECS bleed controller 30 by ECS data bus 16. Bleed system sensors are electrically connected to ECS bleed controller 30 by sensor electrical cables 24. Bleed system actuators 22 are electrically connected to ECS bleed controller 30 by actuator electrical cables 26. ECS bleed controller 30 is integrated into EEC 18, with both ECS bleed controller 30 and EEC 18 contained within housing 34 and, optionally, sharing components required by both, for example, power supply 33. However, ECS bleed controller 30 and EEC 18 are logically distinct controllers operating as independent system controllers. Internal data bus 32 electrically connects EEC 18 with ECS bleed controller 30 to provide engine data from EEC 18, for example, an engine pressure, to ECS bleed controller 30.

In operation, ECS 28 generates bleed air pressure and temperature requirement digital signals necessary to maintain desired cabin pressure and temperature and transmits these signals over ECS digital bus 16 to ECS bleed controller 30. In addition to the signals from ECS 28, ECS bleed controller 30 receives analog data inputs from bleed system sensors 20 over sensor electrical cables 24. Optionally, ECS bleed controller 30 receives digital data inputs from EEC 18 over internal digital bus 32. ECS bleed controller 30 generates analog control signals as a function of at least the signals received from ECS 28 and from bleed system sensors 20. ECS bleed controller 30 transmits the analog control signals to bleed system actuators 22 over actuator electrical cables 26. ECS bleed controller 30 continues to receive analog data inputs from bleed system sensors 20 over sensor electrical cables 24 and digital data inputs from EEC 18 over internal digital bus 32 and transmit analog control signals to bleed system actuators 22 over actuator electrical cables 26 to maintain the bleed air pressure and temperature requirements of ECS 28. Digital data regarding the status of ECS bleed controller 30 and, optionally, the digital data inputs from EEC 18, are transmitted over ECS digital bus 16 to ECS 28. Also, optionally, analog data inputs from bleed system sensors 20 are converted from analog data to digital data in ECS bleed controller 30 and transmitted over ECS digital bus 16 to ECS 28.

The embodiment of the present invention described above provides several advantages by integrating ECS bleed controller 30 with EEC 18 aboard engine 12. A conventional ECS bleed controller located in a fuselage requires multiple sets of sensor and actuator electrical cabling stretching from the fuselage to the engine. In the embodiment of the present invention, these multiple sets of electrical cabling are replaced by sensor electrical cabling 24 and actuator electrical cabling 26 which need only extend within engine 12 and are, therefore, much shorter and much lighter. Data transmission between ECS 28 and ECS bleed controller 30 is handled by single data bus, ECS digital bus 16. The result is a significant wire weight savings. In addition, by integrating ECS bleed controller 30 into EEC 18, additional cost and weight savings are realized by sharing housing 34, as well as sharing components required by both, for example, power supply 33. Finally, by reducing the total length of electrical cabling, opportunities for failure associated with the conventional, lengthy multiple sets of electrical cabling are reduced, increasing the reliability of ECS bleed controller 30.

While the invention has been described with reference to an exemplary embodiment(s), it will be understood by those skilled in the art that various changes may be made without departing from the scope of the invention. Therefore, it is intended that the invention not be limited to the particular embodiment(s) disclosed, but that the invention will include all embodiments falling within the scope of the appended claims.

## Claims

1. An integrated electronic engine control and environmental control system bleed control apparatus for use with an aircraft engine (12), the apparatus comprising:
an electronic engine controller (EEC) (18);
**characterized in that** the apparatus further comprises
an environmental control system (ECS) bleed controller (30) for controlling a flow of bleed air from the aircraft engine (12) to an ECS (28) located in an aircraft fuselage (14); and
a housing (34) containing the EEC (18) and the ECS bleed controller (30) for mounting on or near the aircraft engine (12).

2. The apparatus of claim 1, further comprising:
a power supply (33) for supplying power to both the EEC (18) and the ECS bleed controller (30).

3. The apparatus of claim 1 or 2, further comprising:
a digital data bus (32) connecting the EEC (18) to the ECS bleed controller (30).

4. A system for controlling an aircraft cabin environment, the system comprising:
an environmental control system (ECS) (28) located in an aircraft fuselage (14);
an integrated electronic engine controller and environmental control system bleed control apparatus, as claimed in claims 1 or 2; and
a first digital data bus (16) electrically connecting the ECS (28) to the ECS bleed controller (30), wherein the ECS bleed controller controls a flow of bleed air from the aircraft engine (12) to the ECS (28) in response to data transmitted over the first digital data bus (16).

5. The system of claim 4, further comprising:
a sensor (20) electrically connected to the ECS bleed controller (30) for measuring a bleed air characteristic; and
an actuator (22) electrically connected to the ECS bleed controller (30) for controlling the bleed air characteristic;
wherein the ECS bleed controller (30) controls bleed air for the ECS (28) by sending an actuating electrical signal to the actuator (22), wherein the actuating electrical signal is a function of at least a sensor electrical signal received from the sensor (20) and the data transmitted over the first digital data bus (16).

6. The system of claim 5, wherein the ECS bleed controller (30) converts the sensor electrical signal into sensor digital data and transmits the sensor digital data to the ECS (28) over the first digital data bus (16).

7. The system of claim 5 or 6, wherein the sensor (20) comprises at least one of a pressure sensor and a temperature sensor.

8. The system of claim 5, 6 or 7, wherein the actuator (22) comprises at least one of a solenoid valve, a stepper motor, a torque motor, and an electric motor.

9. The system of any of claims 4 to 8, further comprising:
a second digital data bus (32) connecting the EEC (18) to the ECS bleed controller (30).

10. A method of controlling a flow of bleed air from an aircraft engine to an environmental control system (ECS), **characterized in that** the method comprises:
generating a bleed air requirement signal in the ECS (28) located in an aircraft fuselage (14);
transmitting the bleed air requirement signal over a digital data bus (16) to an ECS bleed controller (30) within an electronic engine controller (EEC) (18) located on or near the aircraft engine (12);
receiving the bleed air requirement signal at the ECS bleed controller (30);
controlling the flow of bleed air from the aircraft engine (12) to the ECS (28) with a signal transmitted from the ECS bleed controller (30) to an actuator (22) located on or near the aircraft engine (12), wherein the signal transmitted from the ECS bleed controller (30) is in response to the received bleed air requirement signal.

11. The method of claim 10, wherein the step of controlling the flow of bleed air from the aircraft engine (12) to the ECS (28) with a signal transmitted from the ECS bleed controller (30) to an actuator (22) located on or near the aircraft engine (12), said signal being transmitted from the ECS bleed controller (30) in response to the received bleed air requirement signal, comprises:
measuring a bleed air characteristic with a sensor (20) located on or near the aircraft engine (12);
generating a sensor electrical signal as a function of the measured bleed air characteristic;
transmitting the generated sensor electrical signal to the ECS bleed controller (30);
receiving the sensor electrical signal at the ECS bleed controller (30);
generating an actuator electrical signal in the ECS bleed controller (30), wherein the actuator electrical signal is a function of at least the bleed air requirement signal and the sensor electrical signal;
transmitting the actuator electrical signal to the actuator (22) controlling the bleed air characteristic;
controlling the bleed air characteristic with the actuator (22) in response to the actuator electrical signal.

## Patentansprüche

1. Integrierte elektronische Motorsteuerung und Ablaufsteuervorrichtung für ein Umweltsteuersystem zur Verwendung mit einem Flugzeugtriebwerk (12), wobei die Vorrichtung Folgendes umfasst:
eine elektronische Motorsteuerung (EEC) (18);
**dadurch gekennzeichnet, dass** die Vorrichtung ferner eine Ablaufsteuerung (30) für ein Umweltsteuersystem (ECS) zum Steuern eines Zapfluftstroms von dem Flugzeugtriebwerk (12) zu einem ECS (28), das sich in einem Flugzeugrumpf (14) befindet; und
ein Gehäuse (34) umfasst, dass die EEC (18) und die ECS-Ablaufsteuerung (30) zum Montieren an oder nahe dem Flugzeugtriebwerk (12) enthält.

2. Vorrichtung nach Anspruch 1, ferner umfassend:
eine Stromversorgung (33), um sowohl die EEC 18) als auch die ECS-Ablaufsteuerung (30) mit Strom zu versorgen.

3. Vorrichtung nach Anspruch 1 oder 2, ferner umfassend:
einen digitalen Datenbus (32), der die EEC (18) mit der ECS-Ablaufsteuerung (30) verbindet.

4. System zum Steuern einer Flugzeugkabinenumgebung, wobei das System Folgendes umfasst:
ein Umgebungssteuersystem (ECS) (28), das sich in einem Flugzeugrumpf (14) befindet;
eine integrierte elektronische Motorsteuerung und Ablaufsteuervorrichtung für ein Umweltsteuersystem nach Anspruch 1 oder 2; und
einen ersten digitalen Datenbus (16), der das ECS (28) elektronisch mit der ECS-Ablaufsteuerung (30) verbindet, wobei die ECS-Ablaufsteuerung einen Zapfluftstrom von dem Flugzeugtriebwerk (12) zu dem ECS (28) als Reaktion auf über den ersten digitalen Datenbus (16) übertragene Daten steuert.

5. System nach Anspruch 4, ferner umfassend:
einen Sensor (20), der elektronisch mit der ECS-Ablaufsteuerung (30) zum Messen einer Zapflufteigenschaft verbunden ist; und
einen Aktor (22), der elektronisch mit der ECS-Ablaufsteuerung (30) zum Steuern der Zapflufteigenschaft verbunden ist;
wobei die ECS-Ablaufsteuerung (30) die Zapfluft für das ECS (28) durch Senden eines elektrischen Betätigungssignals an den Aktor (22) steuert, wobei es sich bei dem elektrischen Betätigungssignal um eine Funktion von mindestens einem elektrischen Sensorsignal, das von dem Sensor (20) empfangen wird, und den über den ersten digitalen Datenbus (16) übertragenen Daten handelt.

6. System nach Anspruch 5, wobei die ECS-Ablaufsteuerung (30) das elektrische Sensorsignal in digitale Sensordaten umwandelt und die digitalen Sensordaten über den ersten digitalen Datenbus (16) an das ECS (28) überträgt.

7. System nach Anspruch 5 oder 6, wobei der Sensor (20) mindestens einen von einem Drucksensor und einem Temperatursensor umfasst.

8. System nach Anspruch 5, 6 oder 7, wobei der Aktor (22) mindestens eines von einem Magnetventil, einem Schrittmotor, einem Drehmomentmotor und einem Elektromotor

9. System nach einem der Ansprüche 4 bis 8, ferner umfassend:
einen zweiten digitalen Datenbus (32), der die EEC (18) mit der ECS-Ablaufsteuerung (30) verbindet.

10. Verfahren zum Steuern eines Zapfluftstroms von einem Flugzeugtriebwerk zu einem Umweltsteuersystem (ECS), **dadurch gekennzeichnet, dass** das Verfahren Folgendes umfasst:
Erzeugen eines Zapfluftanforderungssignals in dem ECS (28), das sich in einem Flugzeugrumpf (14) befindet;
Übertragen des Zapfluftanforderungssignals über einen digitalen Datenbus (16) an eine ECS-Ablaufsteuerung (30) innerhalb einer elektronischen Motorsteuerung (EEC) (18), die sich an oder nahe dem Flugzeugtriebwerk (12) befindet;
Empfangen des Zapfluftanforderungssignals an der ECS-Ablaufsteuerung (30);
Steuern des Zapfluftstroms von dem Flugzeugtriebwerk (12) zu dem ECS (28) mit einem Signal, das von der ECS-Ablaufsteuerung (30) an einen Aktor (22) übertragen wird, der sich an oder nahe dem Flugzeugtriebwerk (12) befindet, wobei das von der ECS-Ablaufsteuerung (30) übertragene Signal als Reaktion auf das empfangene Zapfluftanforderungssignal erfolgt.

11. Verfahren nach Anspruch 10, wobei der Schritt des Steuerns des Zapfluftstroms von dem Flugzeugtriebwerk (12) zu dem ECS (28) mit einem Signal, das von der ECS-Ablaufsteuerung (30) an einen Aktor (22) übertragen wird, der sich an oder nahe dem Flugzeugtriebwerk (12) befindet, wobei das Signal von der ECS-Ablaufsteuerung (30) als Reaktion auf das empfangene Zapfluftanforderungssignal übertragen wird, Folgendes umfasst:
Messen einer Zapflufteigenschaft mit einem Sensor (20), der sich an oder nahe dem Flugzeugtriebwerk (12) befindet;
Erzeugen eines elektrischen Sensorsignals als eine Funktion der gemessenen Zapflufteigenschaft;
Übertragen des erzeugten elektrischen Sensorsignals an die ECS-Ablaufsteuerung (30);
Empfangen des elektrischen Sensorsignals an der ECS-Ablaufsteuerung (30);
Erzeugen eines elektrischen Betätigungssignals in der ECS-Ablaufsteuerung (30), wobei das elektrische Betätigungssignal eine Funktion von mindestens dem Zapfluftanforderungssignal und dem elektrischen Sensorsignal ist;
Übertragen des elektrischen Betätigungssignals an den Aktor (22), der die Zapflufteigenschaft steuert;
Steuern der Zapflufteigenschaft mit dem Aktor (22) als Reaktion auf das elektrische Betätigungssignal.

## Revendications

1. Appareil de contrôle de purge de système de contrôle de l'environnement et de contrôle de moteur électronique intégré destiné à être utilisé avec un moteur d'aéronef (12), l'appareil comprenant :
un contrôleur de moteur électronique (EEC) (18) ;
**caractérisé en ce que** l'appareil comprend en outre un contrôleur de purge de système de contrôle de l'environnement (ECS) (30) destiné à contrôler un écoulement d'air de purge du moteur d'aéronef (12) vers un ECS (28) situé dans un fuselage d'aéronef (14) ; et
un boîtier (34) contenant l'EEC (18) et le contrôleur de purge de l'ECS (30) destiné à être monté sur ou à proximité du moteur d'aéronef (12).

2. Appareil selon la revendication 1, comprenant en outre :
une alimentation (33) pour alimenter l'EEC (18) et le contrôleur de purge de l'ECS (30).

3. Appareil selon la revendication 1 ou 2, comprenant en outre :
un bus de données numériques (32) reliant l'EEC (18) au contrôleur de purge de l'ECS (30).

4. Système de contrôle de l'environnement d'une cabine d'aéronef, le système comprenant :
un système de contrôle de l'environnement (ECS) (28) situé dans un fuselage d'aéronef (14) ;
un appareil de contrôle de purge de système de contrôle de l'environnement et de contrôle de moteur électronique intégré, selon les revendications 1 ou 2 ; et
un premier bus de données numériques (16) reliant électriquement l'ECS (28) au contrôleur de purge de l'ECS (30), dans lequel le contrôleur de purge de l'ECS contrôle un écoulement d'air de purge du moteur d'aéronef (12) vers l'ECS (28) en réponse aux données transmises sur le premier bus de données numériques (16).

5. Système selon la revendication 4, comprenant en outre :
un capteur (20) relié électriquement au contrôleur de purge de l'ECS (30) pour mesurer une caractéristique d'air de purge ; et
un actionneur (22) relié électriquement au contrôleur de purge de l'ECS (30) pour contrôler la caractéristique d'air de purge ;
dans lequel le contrôleur de purge de l'ECS (30) contrôle l'air de purge pour l'ECS (28) en envoyant un signal électrique d'actionnement à l'actionneur (22), dans lequel le signal électrique d'actionnement est fonction d'au moins un signal électrique de capteur reçu du capteur (20) et des données transmises sur le premier bus de données numériques (16).

6. Système selon la revendication 5, dans lequel le contrôleur de purge de l'ECS (30) convertit le signal électrique de capteur en données numériques de capteur et transmet les données numériques de capteur à l'ECS (28) sur le premier bus de données numériques (16).

7. Système selon la revendication 5 ou 6, dans lequel le capteur (20) comprend au moins l'un d'un capteur de pression et d'un capteur de température.

8. Système selon la revendication 5, 6 ou 7, dans lequel l'actionneur (22) comprend au moins l'un d'une vanne électromagnétique, d'un moteur pas à pas, d'un moteur couple et d'un moteur électrique.

9. Système selon l'une quelconque des revendications 4 à 8, comprenant en outre :
un second bus de données numériques (32) reliant l'EEC (18) au contrôleur de purge de l'ECS (30).

10. Procédé de contrôle d'un écoulement d'air de purge d'un moteur d'aéronef vers un système de contrôle de l'environnement (ECS), **caractérisé en ce que** le procédé comprend :
la génération d'un signal de demande d'air de purge dans l'ECS (28) situé dans un fuselage d'aéronef (14) ;
la transmission du signal de demande d'air de purge sur un bus de données numériques (16) à un contrôleur de purge de l'ECS (30) à l'intérieur d'un contrôleur de moteur électronique (EEC) (18) situé sur ou à proximité du moteur d'aéronef (12) ;
la réception du signal de demande d'air de purge au niveau du contrôleur de purge de l'ECS (30) ;
le contrôle de l'écoulement de l'air de purge du moteur d'aéronef (12) vers l'ECS (28) avec un signal transmis du contrôleur de purge de l'ECS (30) à un actionneur (22) situé sur ou à proximité du moteur d'aéronef (12), dans lequel le signal transmis par le contrôleur de purge de l'ECS (30) est en réponse au signal de demande d'air de purge reçu.

11. Procédé selon la revendication 10, dans lequel l'étape de contrôle de l'écoulement de l'air de purge du moteur d'aéronef (12) vers l'ECS (28) avec un signal transmis du contrôleur de purge de l'ECS (30) à un actionneur (22) situé sur ou à proximité du moteur d'aéronef (12), ledit signal étant transmis par le contrôleur de purge de l'ECS (30) en réponse au signal de demande d'air de purge reçu, comprend :
la mesure d'une caractéristique d'air de purge avec un capteur (20) situé sur ou à proximité du moteur d'aéronef (12) ;
la génération d'un signal électrique de capteur en fonction de la caractéristique d'air de purge mesurée ;
la transmission du signal électrique de capteur généré au contrôleur de purge de l'ECS (30) ;
la réception du signal électrique de capteur au niveau du contrôleur de purge de l'ECS (30) ;
la génération d'un signal électrique d'actionneur dans le contrôleur de purge de l'ECS (30), dans lequel le signal électrique d'actionneur est fonction d'au moins le signal de demande d'air de purge et le signal électrique de capteur ;
la transmission du signal électrique d'actionneur à l'actionneur (22) contrôlant la caractéristique d'air de purge ;
le contrôle de la caractéristique d'air de purge avec l'actionneur (22) en réponse au signal électrique d'actionneur.
